# EUROPEAN PATENT APPLICATION

(11) **EP 2 141 909 A1**
(43) Date of publication of application: **06.01.2010**
(21) Application number: 08706445.7
(22) Date of filing: 01.02.2008
(51) Int. Cl.: H04N 5/00

(54) **METHOD FOR OBTAINING A SESSION DESCRIPTION PROTOCOL FILE OF A DIGITAL VIDEO BROADCASTING HANDHELD DEVICE**

(30) Priority: 22.03.2007 CN 200710073647
(71) Applicant: ZTE Corporation, Shenzhen, Guangdong 518057 (CN)
(72) Inventor: CAO, Gang, Shenzhen Guangdong 518057 (CN); ZHANG, Benquan, Shenzhen Guangdong 518057 (CN)
(74) Representative: Gray, John James
(86) International application number: PCT/CN2008/000260
(87) International publication number: WO 2008/113246

(57) **Abstract**

The present invention provides a method for acquiring a session description protocol file for a digital video broadcasting handheld device, during the process of receiving electronic service guide information, the digital video broadcasting handheld device stores the session description protocol files and associated auxiliary attribute information therein in a local file system; a user selects a service channel and specifies a service type, and according to a service identification of the service channel, the digital video broadcasting handheld device inquires and acquires corresponding session description protocol file information and associated auxiliary attribute information; from the acquired information of all session description protocol files and associated auxiliary attributes, the digital video broadcasting handheld device selects a session description protocol file whose auxiliary attribute information matches the service type as the session description protocol file needed by the user. With the present invention, a mobile TV can rapidly and accurately acquire the session description protocol file needed by the user in complex electronic service guide information, and implement the correlative service, so that the overall performance of the mobile TV is improved.

## Description

### Technical Field

The present invention relates to a method for acquiring a session description protocol (referred to as SDP for short hereinafter) in the field of digital video broadcasting handheld (DVB-H) mobile TV, and particularly to a method for enabling a mobile TV to rapidly and accurately acquire the SDP file corresponding to a service identification, i.e. service ID, selected by the user, in complex electronic service guide (referred to as ESG for short hereinafter) information by acquiring the SDP.

### Background of the Invention

With the advent of the 3G era, technologies associated with the mobile TV are becoming hot topics of research in the electronic communication field. In current mainstream standards for the mobile TV, DVB-H is supported by the most companies and has the broadest coverage. It is a transmission standard made by the European Digital Video Broadcasting Standards Institute for providing portable/handheld terminals with multimedia services via the terrestrial digital broadcasting network, and has a promising commercial prospect.

In practical applications, to consume correlative services (for example, to watch TV programs, download video files, and so on) using a DVB-H mobile TV, firstly, it is required to receive and load ESG information in the digital video broadcasting with a ESG browser application on the terminal.

The ESG menu comprises all the information on currently available mobile TV services, including such as TV channel information, TV program information, and correlative parameters required for televising and downloading audio/video files, and with such information, users can select the interested services to consume. Wherein, the parameters (such as the IP address and port number corresponding to channel media data packets in a broadcasting channel, the encoding and decoding format of the media packets, and so on) required for televising (including televising free, scrambled and paid channels) and downloading audio/video files are respectively included in corresponding SDP files.

An SDP file exists in two manners, one is out-of-band, that is, the SDP file is separate from the ESG container file, and the acquisition fragment in the ESG container file only provides information for receiving the file. The other manner is in-band, that is, the SDP file is embedded in the ESG acquisition fragment, and an ESG engine is required to analyze the SDP file from this fragment.

Nowadays most commercial DVB-H networks adopt the latter manner. Generally, a service channel is always associated with an acquisition fragment which comprises only one SDP file, and in this case, when a user selects a service channel to consume, the ESG browser can directly acquire the SDP file required by this channel by inquiring of the ESG engine.

However, in ESG information broadcasted in actual DVB-H commercial networks, some channels are each associated with two or more acquisition fragments, and further some acquisition fragments each comprise two or more SDP files, as a result, these service channels each correspond to multiple SDP files, and an usual solution in the prior art is to attempt to input the SDP files corresponding to the service channel one by one until a correct SDP file is acquired. In a case that the SDP files corresponding to a channel are plenty, the operating efficiency of the mobile TV will largely be reduced and the risk of terminal breakdown will be increased.

Therefore, in a DVB-H mobile TV system, a reliable method is urgently needed to let a mobile TV rapidly and accurately acquire a SDP file required by a user in complex ESG information to implement correlative services, so that the overall performance of the DVB-H mobile TV is improved.

### Summary of the Invention

The technical problem to be solved by the present invention is to provide a method for acquiring a session description protocol file for a digital video broadcasting handheld device, with which an SDP file needed by a user can be rapidly found.

The technical scheme adopted by the present invention is to provide a method for acquiring a session description protocol file for a digital video broadcasting handheld device, comprising:
a. during the process of receiving electronic service guide information, the digital video broadcasting handheld device storing the session description protocol files and associated auxiliary attribute information therein in a local file system;
b. a user selecting a service channel and specifying a service type, and according to a service identification of said service channel, said digital video broadcasting handheld device inquiring and acquiring corresponding session description protocol file information and associated auxiliary attribute information;
c. from the acquired information of all session description protocol files and associated auxiliary attributes, said digital video broadcasting handheld device selecting a session description protocol file whose auxiliary attribute information matches said service type as the session description protocol file needed by the user.

Furthermore, the method further comprises: in said step a, when an electronic service guide engine in said digital video broadcasting handheld device receives a service fragment, the electronic service guide engine storing identification numbers of all acquisition fragments in said service fragment, and when receiving an acquisition fragment, the electronic service guide engine extracting a session description protocol file embedded in said acquisition fragment and storing the session description protocol file in a data structure of the acquisition fragment in the local file system, and meanwhile recording the auxiliary attribute information associated with said session description protocol in the data structure.

Furthermore, the method further comprises: in said step b, said electronic service guide engine finding corresponding acquisition fragments according to said service identification and traversing data structures of these acquisition fragments, and constructing a session description protocol information linked list from the session description protocol files and associated auxiliary attribute information in all the acquisition fragments, and each acquisition fragment being a node in the linked list, and then returning said session description protocol information linked list to an electronic service guide browser in said digital video broadcasting handheld device.

Furthermore, said session description protocol file information comprises an absolute path and a name of the session description protocol file;
said associated auxiliary attribute information comprises component characteristic type information of the session description protocol.

Furthermore, said service types comprise television, broadcast, downloading, and others;
said component characteristic types comprise video, audio, downloading, and others;
said content media types comprise television, broadcast, downloading, and others.

Furthermore, the method further comprises: said associated auxiliary attribute information further comprising a content media type corresponding to the session description protocol file;
if the service type specified by said user is television and there is no session description protocol node whose component characteristic type matches said service type in said session description protocol information linked list, an electronic service guide browser returning a session description protocol node with the highest content media type priority in the television type, and taking the session description protocol file corresponding to this node as the session description protocol file needed by the user;
if the service type specified by said user is broadcast and there is no session description protocol node whose component characteristic type matches said service type in said session description protocol information linked list, the electronic service guide browser returning a session description protocol node with the highest content media type priority in the broadcast type, and taking the session description protocol file corresponding to this node as the session description protocol file needed by the user;

Furthermore, the method further comprises: if the service type specified by said user is television and there is a session description protocol node whose component characteristic type matches said service type in said session description protocol information linked list, an electronic service guide browser returning said session description protocol node whose component characteristic type matches the service type, and taking the session description protocol file corresponding to this node as the session description protocol file needed by the user;
if the service type specified by said user is broadcast and there is a session description protocol node whose component characteristic type matches said service type in said session description protocol information linked list, the electronic service guide browser returning said session description protocol node whose component characteristic type matches the service type, and taking the session description protocol file corresponding to this node as the session description protocol file needed by the user.

Furthermore, said electronic service guide browser returning the session description protocol node with the highest content media type priority refers to: said electronic service guide browser setting a content media type priority of an initial session description protocol node as the lowest, and then traversing every node in said session description protocol information linked list, and if the component characteristic type of a current node is null, setting the content media type priority of said current node according to the content media type thereof, and meanwhile storing or updating a currently highest content media type priority and a corresponding session description protocol node, and if the component characteristic type of a current node is not null and does not match said service type, obtaining a next node in said session description protocol information linked list, and after finishing searching all the nodes, returning the session description protocol node with the highest content media type priority.

Furthermore, the method further comprises: in said step c, if the service type specified by said user is downloading, an electronic service guide browser traversing every node in said session description protocol information linked list, and if the component characteristic type of a current node is downloading, returning said current session description protocol node, otherwise obtaining a next node in said session description protocol information linked list, and if there is no session description protocol node whose component characteristic type is downloading in said linked list, returning the first session description protocol node in said linked list, and taking the session description protocol file corresponding to this node as the session description protocol file needed by the user.

Furthermore, the method further comprises: in said step c, if the service type specified by said user is others, an electronic service guide browser returning the first session description protocol node in said session description protocol information linked list, and taking the session description protocol file corresponding to this node as the session description protocol file needed by the user.

Furthermore, said component characteristic type matching the service type refers to: in case said service type is television, the component characteristic type matching said service type if the component characteristic type includes video; and in case said service type is broadcast, the component characteristic type matching said service type if the component characteristic type is audio.

Furthermore, said setting the content media type priority of the current node according to the content media type of the node is setting the priority according to a frequency of using said content media type, and a more frequently used content media type corresponds to a higher priority.

To sum up, the present invention provides a method for acquiring a session description protocol file for a digital video broadcasting handheld device, which enables a mobile TV to rapidly and accurately acquire the SDP file, required by the service channel selected by the user, in complex ESG information, to implement the correlative service, so that the overall performance of the DVB-H mobile TV is improved.

### Brief Description of the Drawings

FIG. 1 is an overview flow chart of the SDP receipt stage, SDP inquiry stage and SDP decision stage of the method in accordance with the present invention;
FIG. 2 is a flow chart of the processing related to the SDP receipt stage in the method for acquiring the SDP for a DVB-H mobile TV proposed in the present invention;
FIG. 3 is a flow chart of the processing related to the SDP inquiry stage in the method for acquiring the SDP for a DVB-H mobile TV proposed in the present invention;
FIG. 4 is a flow chart of the processing related to the SDP decision stage in the method for acquiring the SDP for a DVB-H mobile TV proposed in the present invention.

### Preferred Embodiments of the Present Invention

The present invention provides a method for acquiring a session description protocol file for a digital video broadcasting handheld device, and the digital video broadcasting handheld device comprises correlative function modules including an ESG engine and an ESG browser. The ESG engine utilizes auxiliary attribute information (such as audio, video, downloading, and so on) in the acquisition fragment to select the correct SDP file of the channel.

The technical scheme of the present invention will be described in detail with accompanying figures and an embodiment.

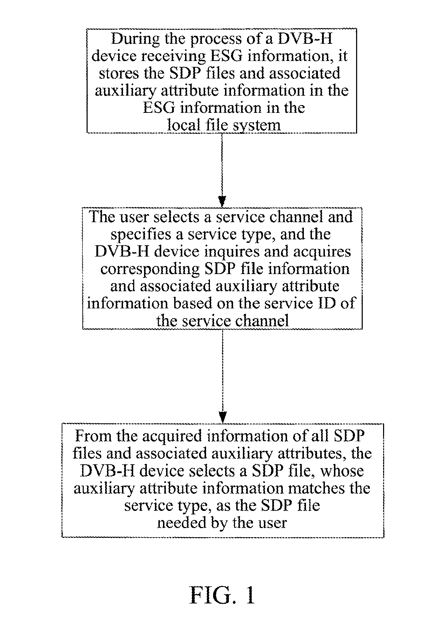

As shown in FIG. 1, the embodiment basically divides into three stages of processing, i.e., processing at a SDP receipt stage, processing at a SDP inquiry stage and processing at a SDP decision stage.

Wherein, the processing of SDP receipt is performed during the process in which the ESG engine receives ESG information. In the ESG information, information associated with SDP is included in service fragments and acquisition fragments. Therefore, when the ESG engine receives a service fragment, it needs to store IDs of all the acquisition fragments in this fragment, while when the ESG engine receives an acquisition fragment, it needs to extract the SDP file embedded in this fragment and stores it in the local file system, and meanwhile records the auxiliary attribute information associated with SDP.

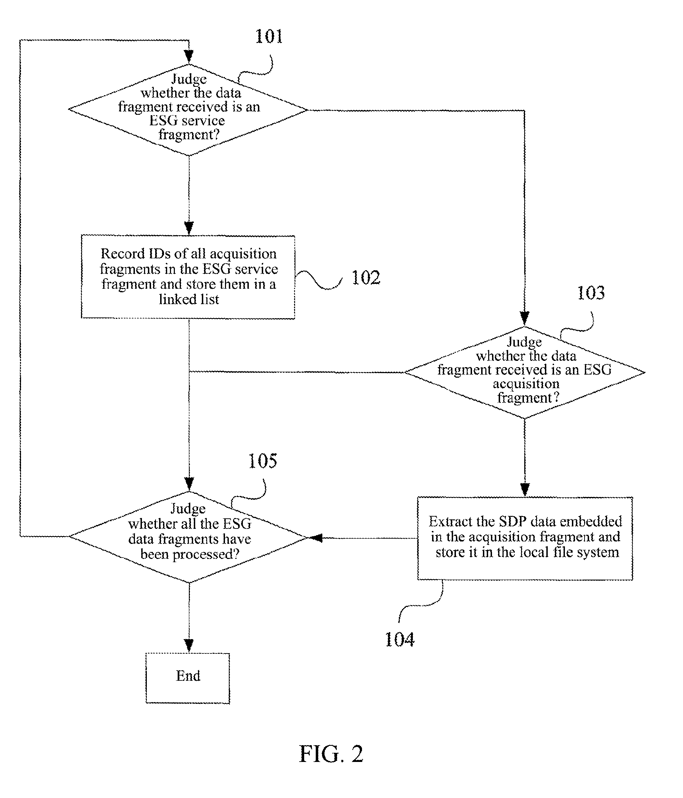

FIG. 2 depicts the processing steps related to the receipt stage of the method for acquiring the SDP for a DVB-H mobile TV in accordance with the embodiment, and the processing comprises:
Step 101: when the ESG engine receives an ESG data fragment, it judges whether the data fragment is an ESG service fragment based on a fragment type ID therein, and if yes, proceeds to step 102, otherwise proceeds to step 103;
Step 102: record IDs of all the acquisition fragments in this ESG service fragment and store them in a linked list, and proceed to step 105;
Step 103: Judge whether the ESG data fragment is an ESG acquisition fragment, and if yes, proceed to step 104, otherwise proceed to step 105;
Step 104: Extract the SDP file embedded in the acquisition fragment, store the SDP file in the local file system, record the auxiliary attribute information associated with SDP in the ESG acquisition fragment, and store the auxiliary attribute information in a data structure of the acquisition fragment;
Step 105: Judge whether all the ESG data fragments have been processed, and if yes, the processing ends, otherwise return to step 101.

The data structure of said ESG acquisition fragment can be defined as follows:
(1) Acquisition fragment ID;
(2) Component description type structure of the acquisition fragment, a service fragment may correspond to multiple acquisition fragments, each of which is a component;
(3) Content media type of the acquisition fragment;
   The content media type (contentMimeType), included in the acquisition fragment, specifies the content type from which the terminal can determine the consuming application of the service, that is, the consuming type selected by the user, such as television, broadcast, file downloading, and so on.
(4) Pointing to the next ESG acquisition fragment structure.

The data structure of the component description type of the acquisition fragment in the above data structure can be defined as follows:
(1) Component characteristic type structure
(2) SDP file path corresponding to the component
(3) Pointing to the next component description type structure.

The above three items compose the information corresponding to a SDP file, and the information of one or more SDP files may be included in an acquisition fragment.

The data structure of the component characteristic type in the above structure can be defined as follows:
(1) A component enumeration type corresponding to the component characteristic;
(2) The next component enumeration type corresponding to the component characteristic;
In this embodiment, the component enumeration types comprise:
a. Video;
b. Audio;
c. File downloading;
d. Others.

An acquisition fragment corresponds to only one content media type, and comprises one or more component description types, and a component description type further comprises one or more component characteristic types. For example,
<Acquisition
acquisitionID="cbms://telecomitalia.it/acquisition/xxx" // ID of an acquisition fragment
contentMimeType="application/mpeg4-generic"> // the content media type of the acquisition fragment
<ComponentDescription> // component description type 1 in the acquisition fragment (component description type 1 comprises only one component characteristic type)
<ComponentCharacteristic xsi:type="esg:FileDownloadComponentType"> // the one component characteristic type comprised in the component description type 1, the component characteristic type is file downloading
...
</ComponentDescription>
<ComponentDescription> // component description type 2 in the acquisition fragment (component description type 2 comprises two component characteristic types)
<ComponentCharacteristic xsi:type="esg:VideoComponentType"/> // the first component characteristic type comprised in the component description type 2, this component characteristic type is video;
<ComponentCharacteristic xsi:type="esg:AudioComponentType"> // the second component characteristic type comprised in the component description type 2, this component characteristic type is audio;
...
</ComponentDescription>
</Acquisition>

In this embodiment, the data structure of each acquisition fragment is associated with one another in a linked list, but the present invention is not limited to a specific data structure or storage manner, as long as there is the information needed, the present invention can be implemented.

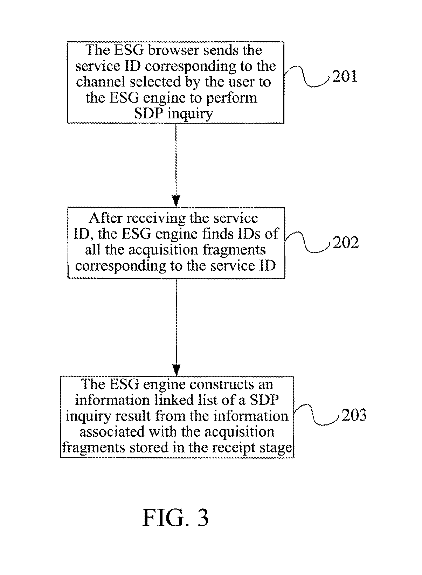

Further, the SDP inquiry process in this embodiment is: when the user selects a service of some type in a service channel to consume on the mobile TV, the ESG browser sends the service ID corresponding to this channel to the ESG engine to inquire the SDP file required by the service. After receiving the service ID, the ESG engine searches and traverses the data structure of each corresponding acquisition fragment, to construct a SDP information linked list from the information associated with SDP stored in the first SDP receipt stage, and returns the linked list to the ESG browser; as shown in FIG. 3, the processing steps in the inquiry stage comprise:
Step 201: when the user selects a service of some type in a service channel to consume on the mobile TV, the ESG browser sends the service ID corresponding to this channel to the ESG engine to perform SDP inquiry;
Step 202: After receiving the service ID, the ESG engine finds IDs of all the acquisition fragments corresponding to this service ID, and a service fragment comprises the IDs of one or more acquisition fragments corresponding to this service fragment;
Step 203: The ESG engine traverses each acquisition fragment ID and constructs an information linked list of a SDP inquiry result from the information associated with the corresponding acquisition fragments stored in the receipt stage, and each node in the information linked list corresponds to a SDP file and the associated auxiliary attribute information, and the data structure of each node is defined as follows:
   (1) Absolute path and name of the SDP file
   (2) Component characteristic type structure of the SDP file
   (3) Content media type corresponding to the SDP file
   (4) Pointing to the next node of the SDP inquiry result

And further, in this embodiment, after the ESG browser receives the SDP information linked list returned by the ESG engine, it needs to decide the SDP file in which node of the linked list is required by the service selected by the user on the mobile TV. According to the SDP file generation rule, in an SDP information linked list corresponding to a service ID, there is only one SDP node whose file matches the type of the service selected by the user. If the service type selected by the user is television, they are regarded as matched if there is video in the component characteristic types; if the service type selected by the user is broadcast, they are regarded as matched if there is audio in the component characteristic types; and if the service type selected by the user is downloading, they are regarded as matched if the component characteristic type is downloading.

The auxiliary attribute data in ESG acquisition fragments is sometimes incomplete, for example, sometimes for improvement of ESG transmission efficiency, the server side only provides part of the auxiliary attributes (the auxiliary attributes are only included in ESG acquisition fragments and have no relationship with the data structure of the SDP file itself), and the ESG engine might mistakenly select a SDP file, and as a result, the service selected by the user can not be implemented. For this problem, the present invention further proposes setting content media type priorities for SDP files, and if the auxiliary attribute information is incomplete, returning the SDP file with the highest content media type priority as the SDP file selected by the user.

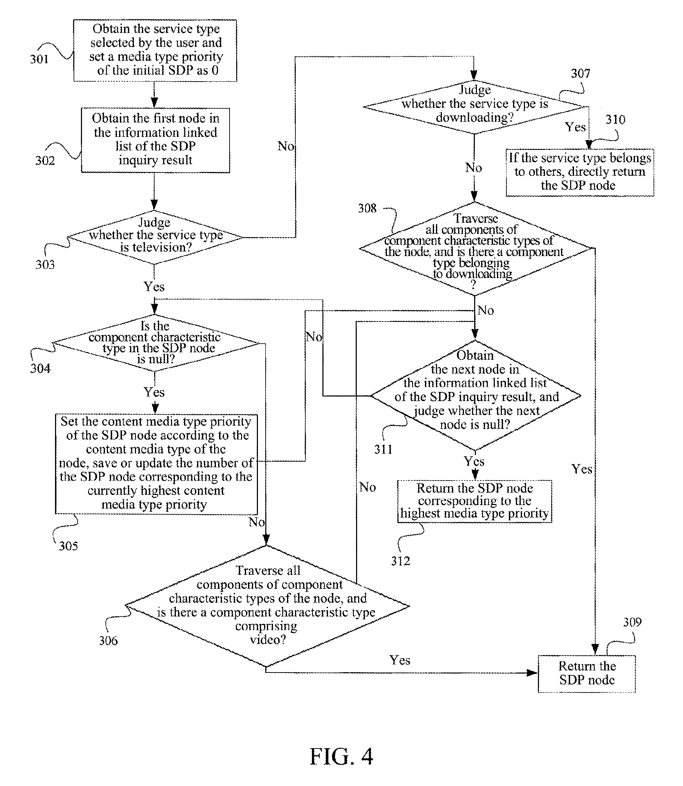

As shown in FIG. 4, the processing in the decision stage is as follows:
Step 301: Determine the service type selected by the user, and set a content media type priority of the initial SDP node as the lowest, for example, may but not limited to set it to 0;
   The service type is included in the service fragment, and generally refers to the type of the service fragment, such as television, broadcast, downloading and others (such as online vote), and a service channel may correspond to one or more service types.
Step 302: Obtain the first node in the information linked list of the SDP inquiry result;
Step 303: Judge whether the service type selected by the user is television, and if yes, proceed to step 304, otherwise proceed to step 307;
Step 304: Judge whether the component characteristic type in the SDP node is null, i.e., whether the ESG data carries component characteristic type information, and if it is null, proceed to step 305, otherwise proceed to step 306;
Step 305: Determine the content media type priority of the current SDP node according to the content media type of the node, and store or update the currently highest content media type priority corresponding to the service type and the corresponding SDP node number, and proceed to step 311;
   Since a user generally only specifies a rough type when specifying a service type, for example, specifying a type of television, broadcast or downloading, but the type of television or broadcast further comprises many subtypes, it is necessary to set a content media type priority of an SDP node according to the content media type of the node.
   The media type priority of a node is set according to the frequency of using the content media type (contentMimeType) of the node, for example, the priority of most frequently used content media types such as "video/mpeg4-generic" in the local network ESG is set as the highest, may but not limited to set the priority of the media types of such nodes as 1, and the priority of more frequently used content media types such as "application/mpeg-laser" takes the second place, may but not limited to set the priority of the media types of such nodes as 0.5, and the priority of the least frequently used content media types such as "application/octet-stream" is set as the lowest, may but not limited to set the priority of the media types of such nodes as 0.1.
Step 306: Traverse all the component enumeration types of the component characteristic types of the node, and judge whether there is a component characteristic type belonging to video, and if yes, proceed to step 309, otherwise proceed to step 311;
Step 307: Judge whether the service type selected by the user is downloading, and if yes, proceed to step 308, otherwise proceed to step 310;
Step 308: Traverse all the component enumeration types of the component characteristic types of the node, and judge whether there is a component characteristic type belonging to downloading, and if yes, proceed to step 309, otherwise proceed to step 311;
Step 309: Return the SDP node and the SDP file corresponding to the node is taken as the SDP required by the user service, and end;
   Downloading is a special type, which is a single type, not like the type of television or broadcast which comprises many subtypes, therefore, if the service type and the component characteristic type are both downloading, it indicates that the service type and the component characteristic type are fully compatible, and the SDP node is definitely the SDP required by the service.
Step 310: if the service type belongs to others, directly return the SDP node, and the SDP file corresponding to the node is taken as the SDP required by the service of the type of others, and end;
   Herein, the service type of others refer to types (such as online vote) other than television, broadcast and downloading, and the service fragment for these types corresponds to only one acquisition fragment, and the acquisition fragment is very simple, which is a SDP file, i.e., this type has only one node, so the process ends here.
Step 311: Obtain the next node in the information linked list of the SDP inquiry result, and if the next node is not null, proceed to step 304, otherwise proceed to step 312;
Step 312: Return the SDP node corresponding to the highest content media type priority, and the SDP file corresponding to the node is taken as the SDP required by the service selected by the user, and end.

In an ESG, the service type being downloading is a special kind, if a service fragment corresponds to multiple SDPs, there is definitely a SDP with a corresponding component characteristic type being downloading; and if the component characteristic type is not specially identified as downloading, the case must be that the service fragment corresponds to only one acquisition fragment, and the acquisition fragment corresponds to only one SDP, and the SDP node is just the node needed by the user.

If the service type is broadcast, the judgment logic and operation flow are similar to those in the case that the service type is television, except that if the service type is broadcast, a node with a component characteristic type being audio is regarded as matching the service type.

Of course, the present invention may have many other embodiments, and without departing from the spirit and essence of the present invention, those skilled in the art can make all kinds of corresponding modifications and variations according to the present invention, but these corresponding modifications and variations should fall into the scope of the attached claims of the present invention.

The method of the present invention does not guarantee that the correct SDP can be found at one time in all cases, but it is the optimal method, which is trying to find the correct SDP with the available information in current network.

### Industrial Applicability

The method of the present invention is able to rapidly and accurately acquire the SDP file needed by a user in complex ESG information, and achieve the correctness of SDP file selection even if the auxiliary attributes (such as component characteristics) of ESG acquisition fragments are incomplete, so that the correlative service can be implemented normally. The method of the present invention overcomes the drawbacks in the conventional method in which the SDP files corresponding to the service channel are input one by one until a correct SDP file is acquired, and significantly improve the overall performance of the DVB-H mobile TV.

## Claims

1. A method for acquiring a session description protocol file for a digital video broadcasting handheld device, comprising:
a. during the process of receiving electronic service guide information, the digital video broadcasting handheld device storing the session description protocol files and associated auxiliary attribute information therein in a local file system;
b. a user selecting a service channel and specifying a service type, and according to a service identification of said service channel, said digital video broadcasting handheld device inquiring and acquiring corresponding session description protocol file information and associated auxiliary attribute information;
c. from the acquired information of all session description protocol files and associated auxiliary attributes, said digital video broadcasting handheld device selecting a session description protocol file whose auxiliary attribute information matches said service type as the session description protocol file needed by the user.

2. A method of claim 1, further comprising:
in said step a, when an electronic service guide engine in said digital video broadcasting handheld device receives a service fragment, the electronic service guide engine storing identification numbers of all acquisition fragments in said service fragment, and when receiving an acquisition fragment, the electronic service guide engine extracting a session description protocol file embedded in said acquisition fragment and storing the session description protocol file in a data structure of the acquisition fragment in the local file system, and meanwhile recording the auxiliary attribute information associated with said session description protocol in the data structure.

3. A method of claim 2, further comprising:
in said step b, said electronic service guide engine finding corresponding acquisition fragments according to said service identification and traversing data structures of these acquisition fragments, and constructing a session description protocol information linked list from the session description protocol files and associated auxiliary attribute information in all the acquisition fragments, and each acquisition fragment being a node in the linked list, and then returning said session description protocol information linked list to an electronic service guide browser in said digital video broadcasting handheld device.

4. A method of any one in claims 1-3, wherein,
said session description protocol file information comprises an absolute path and a name of the session description protocol file;
said associated auxiliary attribute information comprises component characteristic type information of the session description protocol.

5. A method of claim 4, wherein,
said service types comprise television, broadcast, downloading, and others;
said component characteristic types comprise video, audio, downloading, and others;
said content media types comprise television, broadcast, downloading, and others.

6. A method of claim 5, further comprising:
said associated auxiliary attribute information further comprising a content media type corresponding to the session description protocol file;
if the service type specified by said user is television and there is no session description protocol node whose component characteristic type matches said service type in said session description protocol information linked list, an electronic service guide browser returning a session description protocol node with the highest content media type priority in the television type, and taking the session description protocol file corresponding to this node as the session description protocol file needed by the user;
if the service type specified by said user is broadcast and there is no session description protocol node whose component characteristic type matches said service type in said session description protocol information linked list, the electronic service guide browser returning a session description protocol node with the highest content media type priority in the broadcast type, and taking the session description protocol file corresponding to this node as the session description protocol file needed by the user;

7. A method of claim 5, further comprising:
if the service type specified by said user is television and there is a session description protocol node whose component characteristic type matches said service type in said session description protocol information linked list, an electronic service guide browser returning said session description protocol node whose component characteristic type matches the service type, and taking the session description protocol file corresponding to this node as the session description protocol file needed by the user;
if the service type specified by said user is broadcast and there is a session description protocol node whose component characteristic type matches said service type in said session description protocol information linked list, the electronic service guide browser returning said session description protocol node whose component characteristic type matches the service type, and taking the session description protocol file corresponding to this node as the session description protocol file needed by the user.

8. A method of claim 6, wherein,
said electronic service guide browser returning the session description protocol node with the highest content media type priority refers to: said electronic service guide browser setting a content media type priority of an initial session description protocol node as the lowest, and then traversing every node in said session description protocol information linked list, and if the component characteristic type of a current node is null, setting the content media type priority of said current node according to the content media type thereof, and meanwhile storing or updating a currently highest content media type priority and a corresponding session description protocol node, and if the component characteristic type of a current node is not null and does not match said service type, obtaining a next node in said session description protocol information linked list, and after finishing searching all the nodes, returning the session description protocol node with the highest content media type priority.

9. A method of claim 5, further comprising:
in said step c, if the service type specified by said user is downloading, an electronic service guide browser traversing every node in said session description protocol information linked list, and if the component characteristic type of a current node is downloading, returning said current session description protocol node, otherwise obtaining a next node in said session description protocol information linked list, and if there is no session description protocol node whose component characteristic type is downloading in said linked list, returning the first session description protocol node in said linked list, and taking the session description protocol file corresponding to this node as the session description protocol file needed by the user.

10. A method of claim 5, further comprising:
in said step c, if the service type specified by said user is others, an electronic service guide browser returning the first session description protocol node in said session description protocol information linked list, and taking the session description protocol file corresponding to this node as the session description protocol file needed by the user.

11. A method of claim 6, 7 or 8, wherein,
said component characteristic type matching the service type refers to: in case said service type is television, the component characteristic type matching said service type if the component characteristic type includes video; and in case said service type is broadcast, the component characteristic type matching said service type if the component characteristic type is audio.

12. A method of claim 8, wherein,
said setting the content media type priority of the current node according to the content media type of the node is setting the priority according to a frequency of using said content media type, and a more frequently used content media type corresponds to a higher priority.
